# EUROPEAN PATENT SPECIFICATION

(11) **EP 1 879 469 B1**
(45) Date of publication and mention of the grant of the patent: **09.11.2011**
(21) Application number: 06759504.1
(22) Date of filing: 11.05.2006
(51) Int. Cl.: A23K 1/10, A23K 1/18

(54) **METHODS FOR ENHANCING PALATABILITY OF COMPOSITIONS FOR ANIMAL CONSUMPTION**
VERFAHREN ZUR VERBESSERUNG DER SCHMACKHAFTIGKEIT VON ZUSAMMENSETZUNGEN FÜR DEN TIERISCHEN VERZEHR
PROCEDES POUR AUGMENTER L'APPETIBILITE DE COMPOSITIONS DESTINEES A LA CONSOMMATION ANIMALE

(30) Priority: 11.05.2005 US 679756 P
(43) Date of publication of application: 23.01.2008
(60) Divisional application: 11183412.3
(73) Proprietor: Hill's Pet Nutrition, Inc., Topeka, KS 66603 (US)
(72) Inventor: HAYWARD, Larry, Harland, Topeka, Kansas 66617 (US); KATS, Lauren, Jay, Topeka, Kansas 66614 (US); YAMKA, Ryan, Michael, Topeka, Kansas 66610 (US)
(74) Representative: Daniels, Jeffrey Nicholas
(86) International application number: PCT/US2006/018113
(87) International publication number: WO 2006/122196

(56) References cited:
- EP-A1- 1 374 698
- WO-A-2005/032268
- WO-A1-97/29763
- WO-A1-02/064502
- US-A- 3 917 821
- US-A- 4 393 082
- US-A- 4 515 780
- US-A- 4 759 932
- US-A- 5 122 512
- US-A- 5 785 990
- US-A- 5 908 634
- US-A- 5 908 634
- US-A- 6 045 834
- US-A- 6 156 355
- US-B1- 6 358 546
- US-B2- 6 568 347
- FETHIERE ET AL.: "The utilisation of sodium in sodium zeolite A by broilers" POULTRY SCIENCE, vol. 73, 1994, pages 118-121, XP8114196 USCHAMPAIGN, IL ISSN: 0032-5791
- DATABASE FSTA [Online] INTERNATIONAL FOOD INFORMATION SERVICE (IFIS), FRANkFURT-MAIN, DE; 1992, ROUSSEL J D ET AL: "Effect of feeding various levels of sodium zeolite A on milk yield, milk composition and blood profiles in thermally stressed Holstein cows." XP002553286 Database accession no. 92-1-08-p0033
- MOHAN B ET AL: "Effect of aluminium silicate in ameliorating the toxicity of aflatoxin in commercial layers." POULTRY GUIDE 1994 DEP. OF ANIMAL NUTR., VET. COLL. & RES. INST., NAMAKKAL 647 002, INDIA, vol. 31, no. 7, 1994, page 37, XP002553287
- DATABASE BIOSIS [Online] BIOSCIENCES INFORMATION SERVICE, PHILADELPHIA, PA, US; 1976, GWILT P R ET AL: "INFLUENCE OF THICKENING AGENTS ON THE ANTIDOTAL EFFICACY OF ACTIVATED CHARCOAL" XP002553288 Database accession no. PREV197662040531
- DATABASE WPI Week 199023 Thomson Scientific, London, GB; AN 1990-173667 XP002553289 & HU 51 112 A (VASVARI P) 30 April 1990 (1990-04-30)
- anon: "Australian Zeolite - A Stockfeed Success Story", , 2004, Retrieved from the Internet: URL:http://www.zeolite.com.au/products/nut rition2.html [retrieved on 2010-06-29]

## Description

### CROSS-REFERENCE TO RELATED APPLICATIONS

This application claims priority to U.S. Provisional Application Serial No. 60/679,756 filed May 11, 2005.

### BACKGROUND OF THE INVENTION

### Field of the Invention

This invention relates generally to methods for enhancing the palatability of compositions for animal consumption and to compositions for animal consumption containing palatability enhancers.

### Description of the Prior Art

In designing foods for animals, particularly companion animals such as cats and dogs, optimal animal health or wellness through good nutrition is an important goal. However, even the most nutritious animal food is of little value if the animal rejects or refuses to eat the food, or if the animal's intake of the food is restricted because the animal finds the food unpalatable.

Enticing a companion or other animal to eat can be an expensive and time consuming chore. Foods with varying moisture content, supplements, and treats have been developed to encourage animals to eat. However, these solutions to the problem are not always effective.

Numerous potential palatability enhancers are available for pets, the only limitation appearing to be the imagination of the selector. Some are commercially available as flavoring agents. Others are prepared by family recipes handed down over generations. Others are continually being synthesized anew, extracted from natural products, or digested from various animal organs. The success of these materials in compositions for animal consumption is not predictable. Firstly, a potential palatability enhancer should be compatible with the composition during processing and packaging and it should possess a practical extended shelf-life. Secondly, the palatability enhancer should be appealing to the animal's sense of taste, smell, physical attractiveness and other attributes which appear in the overall composition. Thirdly, the palatability enhancer should be compatible with the animal after ingestion such that it does not cause any significant problems to the animal, particularly gastrointestinal problems.
WO2005/032268 discloses an animal/marine feed supplement in the improvement of feed efficiency.
Fethiere *et al* 1993 (XP00811496) discloses the utilisation of sodium in sodium zeolite A by broilers.
WO02/064502 discloses processes of obtaining organozeolite adsorbent of mycotoxins.
EP1374698 discloses feed additives for dogs.
ANON (Australian Zeolite - A stock feed success story, 2004, http:/www.zeolite.com.an/products/nutrition2.html is directed to natural Australian zeolite, and its use in feed additives.

### SUMMARY OF THE INVENTION

The present invention provides a use of zeolite as a palatability enhancer in a composition for animal consumption, wherein the composition further comprises at least one ingredient suitable for consumption by an animal, and wherein the zeolite comprises from about 0.01% to about 4% by weight of the composition, and wherein the animal is a canine or feline.

The present invention additionally provides a method for enhancing palatability of a composition for consumption by an animal, the method comprising adding zeolite to the composition, wherein the zeolite is used to enhance palatability of the composition, wherein the zeolite comprises from about 0.01% to about 4% by weight of the composition, and wherein the animal is a canine or a feline.

The description provides methods for increasing the ingestion frequency of a composition for consumption by an animal.

The description provides methods for increasing the ingestion rate of a composition for consumption by an animal.

The description provides articles of manufacture in the form of kits that contain combinations of compositions useful for enhancing palatability of compositions for animal consumption.

Generally, the composition comprises at least about 0.01% zeolite and at least one ingredient selected from the group consisting of protein, fat, carbohydrate, fiber, and combinations thereof, most preferably in amounts of from about 0,01% to about 4%. Kits comprising compositions for animal consumption and zeolite are also described.

Compositions for animal consumption containing zeolite exhibit surprisingly high palatability to an animal and therefore can be used to increase consumption and ingestion frequency by the animal, particularly for pet food compositions that otherwise are of inferior palatability to an animal.

Other objects, features and advantages of the present invention will be readily apparent to those skilled in the art.

### DETAILED DESCRIPTION OF THE INVENTION

### Definitions

The term "zeolite" means a single zeolite or a mixture of two or more zeolites.

The term "enhanced palatability" means an increased palatability of a composition containing zeolite when compared to substantially the same composition without zeolite.

The term "ingestion rate" means the amount of a composition ingested per unit of time, e.g., at a meal.

The term "ingestion frequency" means the number of times an animal consumes a composition in a unit of time, e.g., an animal eats a meal three times a day.

The term "single package" means that the components of a kit are physically associated in or with one or more containers and considered a unit for manufacture, distribution, sale, or use. Containers include, but are not limited to, bags, boxes, bottles, shrink wrap packages, stapled or otherwise affixed components, or combinations thereof. A single package may be containers of individual food compositions physically associated such that they are considered a unit for manufacture, distribution, sale, or use.

The term "virtual package" means that the components of a kit are associated by directions on one or more physical or virtual kit components instructing the user how to obtain the other components, e.g., in a bag containing one component and directions instructing the user to go to a website, contact a recorded message, view a visual message, or contact a caregiver or instructor to obtain instructions on how to use the kit.

This invention is not limited to the particular methodology, protocols, and reagents described herein because they may vary. Further, the terminology used herein is for the purpose of describing particular embodiments only and is not intended to limit the scope of the present invention. As used herein and in the appended claims, the singular forms "a," "an," and "the" include plural reference unless the context clearly dictates otherwise, e.g., reference to "a zeolite" includes a plurality of such zeolites.

Unless defined otherwise, all technical and scientific terms and any acronyms used herein have the same meanings as commonly understood by one of ordinary skill in the art in the field of the invention. Although any methods and materials similar or equivalent to those described herein can be used in the practice of the present invention, the preferred methods, devices, and materials are described herein.

All patents, patent applications, and publications mentioned herein are incorporated herein by reference to the extent allowed by law for the purpose of describing and disclosing the compounds and methodologies reported therein that might be used with the present invention. However, nothing herein is to be construed as an admission that the invention is not entitled to antedate such disclosure by virtue of prior invention.

### The Invention

In one aspect, the present description provides compositions for animal consumption having enhanced palatability. The compositions comprise a palatability enhancing amount of zeolite and at least one ingredient suitable for consumption by an animal. Preferably, the compositions comprise at least about 0.01% by weight zeolite and an ingredient is selected from the group consisting of protein, fat, carbohydrate, and fiber. The invention is based upon the novel discovery that adding zeolite to a composition for consumption by an animal enhances palatability of the composition and increases the likelihood that an animal will consume the composition. Adding zeolite to a composition for consumption also increases the ingestion frequency and ingestion rate of the composition.

Zeolites are three-dimensional, microporous, crystalline solids with a well-defined structure comprising aluminum, silicon, and oxygen in a tetrahedral framework. Zeolites have large open spaces or cages in their structure that form channels allowing easy movement of ions and molecules into and out of the structure. The negative charge of the Al⁻ is balanced by the presence of cations including calcium, magnesium, sodium, potassium, and iron.

Nearly 50 naturally occurring members of the zeolite family have been discovered and more than 150 zeolite structural types have been synthesized. Except where the context demands otherwise, the term "zeolite" is used generically herein to encompass any mineral including but not limited to: the Analcime Family including analcime (hydrated sodium aluminum silicate), pollucite (hydrated cesium sodium aluminum silicate), wairakite (hydrated calcium sodium aluminum silicate), bellbergite (hydrated potassium barium strontium sodium aluminum silicate), bikitaite (hydrated lithium aluminum silicate), boggsite (hydrated calcium sodium aluminum silicate) and brewsterite (hydrated strontium barium sodium calcium aluminum silicate); the Chabazite Family including chabazite (hydrated calcium aluminum silicate), willhendersonite (hydrated potassium calcium aluminum silicate), cowlesite (hydrated calcium aluminum silicate), dachiardite (hydrated calcium sodium potassium aluminum silicate), edingtonite (hydrated barium calcium aluminum silicate), epistilbite (hydrated calcium aluminum silicate), erionite (hydrated sodium potassium calcium aluminum silicate), faujasite (hydrated sodium calcium magnesium aluminum silicate) and ferrierite (hydrated sodium potassium magnesium calcium aluminum silicate); the Gismondine Family including amicite (hydrated potassium sodium aluminum silicate), garronite (hydrated calcium aluminum silicate), gismondine (hydrated barium calcium aluminum silicate), gobbinsite (hydrated sodium potassium calcium aluminum silicate), gmelinite (hydrated sodium calcium aluminum silicate), gonnardite (hydrated sodium calcium aluminum silicate) and goosecreekite (hydrated calcium aluminum silicate); the Harmotome Family including harmotome (hydrated barium potassium aluminum silicate), phillipsite (hydrated potassium sodium calcium aluminum silicate) and wellsite (hydrated barium calcium potassium aluminum silicate); the Heulandite Family including clinoptilolite (hydrated sodium potassium calcium aluminum silicate), heulandite (hydrated sodium calcium aluminum silicate), laumontite (hydrated calcium aluminum silicate), levyne (hydrated calcium sodium potassium aluminum silicate), mazzite (hydrated potassium sodium magnesium calcium aluminum silicate), merlinoite (hydrated potassium sodium calcium barium aluminum silicate), montesommaite (hydrated potassium sodium aluminum silicate) and mordenite (hydrated sodium potassium calcium aluminum silicate); the Natrolite Family including mesolite (hydrated sodium calcium aluminum silicate), natrolite (hydrated sodium aluminum silicate), scolecite (hydrated calcium aluminum silicate), offretite (hydrated calcium potassium magnesium aluminum silicate), paranatrolite (hydrated sodium aluminum silicate), paulingite (hydrated potassium calcium sodium barium aluminum silicate) and perlialite (hydrated potassium sodium calcium strontium aluminum silicate); and the Stilbite Family including barrerite (hydrated sodium potassium calcium aluminum silicate), stilbite (hydrated sodium calcium aluminum silicate), stellerite (hydrated calcium aluminum silicate), thomsonite (hydrated sodium calcium aluminum silicate), tschernichite (hydrated calcium aluminum silicate) and yugawaralite (hydrated calcium aluminum silicate). The term zeolite is also used generically herein to encompass any mineral including the natural zeolite, synthetic materials, silicate minerals and phosphate minerals that have a zeolite like structure. Synthetic zeolite include zeolite A, non-fibrous zeolite, zeolite 4A, zeolite MS4A, and zeolite MS5A. Zeolite silicate minerals include hsianghualite, lovdarite, viseite, partheite, prehnite, roggianite, apophyllite, gyrolite, maricopaite, okenite, tacharanite and tobermorite. Zeolite phosphate minerals include kehoeite, pahasapaite and tiptopite.

Any type or form of zeolite that is acceptable for use in a composition for animal consumption may be used in the present invention. An illustrative example of a zeolite suitable for use in the present invention is clinoptilolite. Clinoptilolite is commercially available as SAFETYSORB from Safetysorb Zeolite, Inc. of Las Vegas, Nevada but may be obtained from any source.

The zeolite is added to the composition in an amount that is effective in providing enhanced palatability to the composition. Typically, such a palatability enhancing amount may be as little as about 0.01% by weight of the composition or may be as much as about 4% by weight or more of the composition. In certain embodiments, the amount of zeolite for use as a palatability enhancing agent may be from about 0.01% by weight of the composition to about 2% by weight of the composition. In another embodiment, the amount of zeolite for use as a palatability enhancing agent may be from about 0.5% by weight of the composition to about 2% by weight of the composition. Unless otherwise specifically indicated, all weights and concentrations for the compositions of the present invention are based on dry weight of a composition after all components and ingredients are admixed.

The zeolite should be present at concentrations that are not toxic or otherwise deleterious to an animal's health. Thus, the zeolite should be present at concentrations that do not cause undesirable effects on digestion, particularly long term undesirable effects on digestion, such as undesirable effects lasting several days or longer. Undesirable effects on digestion may include constipation or diarrhea.

This description provides a variety of compositions containing zeolite, e.g., foods, nutritional diets, supplements, treats, and food toys such as chewable and consumable toys.

In some embodiments, the composition is a food. Both liquid and solid foods are provided. When the food is a liquid, the zeolite may be admixed with the food. Where the food is solid, the zeolite may be coated on the food, incorporated into the food, or both. The food includes both dry foods and wet foods. The non-zeolite components of the food and their typical proportions include those listed in Table 1.

**Table 1**

| Component | Typical proportion of the composition (% dry weight of the composition) |
|---|---|
| Carbohydrate | from about 0% to about 50%, preferably from about 5% to about 45% |
| Protein | from about 5% to about 70%, preferably from about 10% to about 70%, most preferably from about 10% to about 60% |
| Fat | from about 2% to about 50%, preferably from about 5% to about 50%, most preferably from about 5% to about 40% |
| Dietary fiber | from about 0% to about 40%, preferably from about 1% to about 20%, most preferably from about 1% to about 6% |
| Nutritional balancing agents (i.e., vitamins, minerals and trace elements) | from about 0% to about 15%, preferably from about 0% to about 10%, most preferably from about 2% to about 8% |

In one embodiment, the composition is a food comprising:
(a) at least about 0.01% zeolite; and
(b) at least one of the following:
   (i) from about 5% to about 70% (or from about 10% to about 70%, or from about 10% to about 60%) protein, and
   (ii) from about 2% to about 50% (or from about 5% to about 50%, or from about 5% to about 40%) fat.

In another, the composition further comprises at least one of:
(a) no greater than about 50% (or from about 5% to about 45%) carbohydrate,
(b) no greater than about 40% (or from about 1% to about 20%, or from about 1% to about 5.5%) dietary fiber, and
(c) no greater than about 15% (or no greater than about 10%, or from about 2% to about 8%) of one or more nutritional balancing agents

In a further embodiment, the composition is a food comprising:
(a) from about 0.01% to about 2% zeolite,
(b) from about 5% to about 70% (or from about 10% to about 70%, or from about 10% to about 60%) protein,
(c) from about 2% to about 50% (or from about 5% to about 50%, or from about 5% to about 40%) fat,
(d) no greater than about 50% (or from about 5% to about 45%) carbohydrate,
(e) no greater than about 40% (or from about 1% to about 20%, or from about 1% to about 5.5%) dietary fiber, and
(f) no greater than about 15% (or no greater than about 10%, or from about 2% to about 8%) of one or more nutritional balancing agents.

Specific suitable amounts for each component in a composition will depend on a variety of factors such as the species of animal consuming the composition; the particular components included in the composition; the age, weight, general health, sex, and diet of the animal; the animal's consumption rate; and the like. Thus, the component amounts may vary widely, and may even deviate from the proportions set forth herein.

The protein food ingredient is obtained from a variety sources such as plants, animals, or both. Animal protein includes meat, meat by-products, dairy, and eggs. Meats include the flesh from poultry, fish, and animals such as cattle, swine, sheep, goats, and the like. Meat by-products include lungs, kidneys, brain, livers, stomachs, and intestines. The protein food ingredient may also be free amino acids and/or peptides. Preferably, the protein food ingredient comprises meat, a meat by-product, dairy products, or eggs.

The fat and carbohydrate food ingredient is obtained from a variety of sources such as animal fat, fish oil, vegetable oil, meat, meat by-products, grains, other animal or plant sources, and mixtures thereof. Grains include wheat, com, barley, and rice.

The fiber food ingredient is obtained from a variety of sources such as vegetable fiber sources, e.g., cellulose, beet pulp, peanut hulls, and soy fiber.

Particularly when the composition is an animal food, vitamins and minerals preferably are included in amounts required to avoid deficiency and maintain health. These amounts are readily available in the art. The National Research Council (NRC) provides recommended amounts of such ingredients for farm animals. See, e.g., Nutrient Requirements of Swine (10th Rev. Ed., Nat'l Academy Press, Wash. D.C., 1998), Nutrient Requirements of Poultry (9th Rev. Ed., Nat'l Academy Press, Wash. D.C., 1994), Nutrient Requirements of Horses (5th Rev. Ed., Nat'l Academy Press, Wash. D.C., 1989), etc. The American Feed Control Officials (AAFCO) provides recommended amounts of such ingredients for dogs and cats. See American Feed Control Officials, Inc., Official publication, pages 126-140 (2003). Vitamins generally useful as food additives include vitamin A, vitamin B1, vitamin B2, vitamin B6, vitamin B12, vitamin C, vitamin D, vitamin E, vitamin H (biotin), vitamin K, folic acid, inositol, niacin, and pantothenic acid. Minerals and trace elements generally useful as food additives include calcium, phosphorus, sodium, potassium, magnesium, copper, zinc, choline, and iron.

The compositions may contain additional ingredients such as vitamins, minerals, fillers, palatability enhancers, binding agents, flavors, stabilizers, emulsifiers, sweeteners, colorants, buffers, salts, coatings, and the like known to skilled artisans. Stabilizers include substances that tend to increase the shelf life of the composition such as preservatives, synergists and sequestrants, packaging gases, stabilizers, emulsifiers, thickeners, gelling agents, and humectants. Examples of emulsifiers and/or thickening agents include gelatin, cellulose ethers, starch, starch esters, starch ethers, and modified starches. Specific amounts for each composition component, food ingredient, and other ingredients will depend on a variety of factors such as the particular components and ingredients included in the composition; the species of patient; the patient's age, body weight, general health, sex, and diet; the patient's consumption rate; the type of disease being treated (if any); and the like. Therefore, the ingredient amounts may vary widely and may deviate from the preferred proportions described herein. The amount of such additives in a composition typically is up to about 5% by weight.

The compositions may be or may contain additional ingredients intended to maintain or improve the health of the animal, e.g., supplements, medications, herbs, holistic drugs and compositions, and the like. The present palatability enhancer is particularly useful when the composition is or contains an unpalatable medication such as a drug having less than desirable palatability to an animal, e.g., typical small molecule pharmaceuticals, small proteins, macromolecular proteins and molecules, and antibodies administered orally.

Supplements useful in the present invention include a feed used with another feed to improve the nutritive balance or performance of the total. Supplements include compositions that are fed undiluted as a supplement to other feeds, offered free choice with other parts of an animal's ration that are separately available, or diluted and mixed with an animal's regular feed to produce a complete feed. The AAFCO provides a discussion relating to supplements in the American Feed Control Officials, Inc. Official Publication, page 220 (2003). Supplements may be in various forms including powders, liquids, syrups, pills, encapsulated compositions, and the like.

Treats include compositions that are given to an animal to entice the animal to eat during a non-meal time, e.g., dog bones for canines. Treats may be nutritional wherein the composition comprises one or more nutrients, and may have a composition as described above for food. Non-nutritional treats encompass any other treats that are non-toxic. The zeolite is coated onto the treat, incorporated into the treat, or both.

Toys include chewable toys such as artificial bones. The zeolite can form a coating on the surface of the toy or on the surface of a component of the toy, be incorporated partially or fully throughout the toy, or both. In one embodiment, the zeolite is orally accessible by the intended user. There are a wide range of suitable toys currently marketed, e.g.,, U.S. Pat. No. 5,339,771, U.S. Pat. No. 5,419,283, and references disclosed therein. This invention provides both partially consumable toys, e.g., toys comprising plastic components, and fully consumable toys, e.g., rawhides and various artificial bones. Further, the invention provides toys for both human and non-human use, particularly for companion, farm, and zoo animal use, and particularly for dog, cat, or bird use.

In preparing the compositions, the components are adjusted so that the zeolite is present in the composition at a concentration of at least 0.01%, preferably from about 0.01% to about 4%, most preferably from about 0.5% to about 2% by weight of the composition. The zeolite may be incorporated into the composition during the processing of the formulation, such as during and/or after mixing of other components of the composition. Distribution of these components into the composition is accomplished by conventional means.

Compositions (particularly foods) can be prepared in a dry form using conventional processes. In one embodiment, dry ingredients, including animal protein sources, plant protein sources, grains, etc. are ground and mixed together. Moist or liquid ingredients, including fats, oils, animal protein sources, water, etc. are then added to and mixed with the dry mix. The mixture is then processed into kibbles or similar dry pieces. Kibble is often formed using an extrusion process in which the mixture of dry and wet ingredients is subjected to mechanical work at a high pressure and temperature, and forced through small openings and cut off into kibble by a rotating knife. The wet kibble is then dried and optionally coated with one or more topical coatings which may include flavors, fats, oils, powders, and the like. Kibble also can be made from the dough using a baking process, rather than extrusion, wherein the dough is placed into a mold before dry-heat processing.

The palatability enhancing zeolite may be added to the food composition in its normal preparation procedure such as mixing, extrusion, baking and the like or is preferably added after its preparation post extrusion, such as by spraying or coating the surface of the food. This is particularly desirable for dry foods wherein the extruded strands are contacted with the zeolite (or a solution comprising the zeolite) by spraying or coating the extruded strands before the strands are cut into a kibble, or the kibble is contacted with the zeolite (or a solution comprising the zeolite) by spraying, coating or dipping the kibble per se.

For topical application to a food, the zeolite is mixed with a carrier composition to facilitate application to the surface of the food composition. For example, a liquid, slurry, light gel, or watery solid can all be utilized as a carrier for the compound(s) of this composition. A standard spraying or dipping apparatus is employed to apply the compound(s) to the surface of the food composition. An example of such a carrier is a minced animal by-product treated with proteases in conjunction with amino acids, reducing sugar(s) and thiamin. The carrier is then mixed with the zeolite and coated onto a kibble, thereby preparing a very palatable and acceptable dry food. In a certain preferred embodiment, the zeolite may simply be mixed with a commercial liquid palatant enhancer or other flavor composition to create a novel flavor palatant which can then be topically applied to the composition. Suitable commercial liquid palatant enhancers for use with the zeolite in the present invention include any known or commercially available liquid palatant enhancers commercially available from pet food palatant enhancer or other flavor suppliers known to those of skill in the art.

Compositions (particularly foods) can be prepared in a canned or wet form using conventional pet food processes. In one embodiment, ground animal (e.g., mammal, poultry, fish and/or seafood) proteinaceous tissues are mixed with the other ingredients, including fish oils, cereal grains, other nutritionally balancing ingredients, special purpose additives (e.g., vitamin and mineral mixtures, inorganic salts, cellulose and beet pulp, bulking agents, and the like). Water sufficient for processing may also be added. The wet form ingredients are typically mixed in a vessel suitable for heating while blending the components. Heating of the mixture may be accomplished using any suitable manner, such as by direct steam injection or by using a vessel fitted with a heat exchanger. Following the addition of the last ingredient, the mixture is heated to a temperature range of from about 10°C (50°F) to about 100°C (212°F). Temperatures outside this range are acceptable, but may be commercially impractical without use of other processing aids. When heated to the appropriate temperature, the material will typically be in the form of a thick liquid. The thick liquid is filled into cans. A lid is applied, and the container is hermetically sealed. The sealed can is then placed into conventional equipment designed to sterilize the contents. This is usually accomplished by heating to temperatures of greater than about 230°F for an appropriate time, which is dependent on the temperature used and the composition.

For wet foods, the zeolite can be incorporated into the wet food composition along with a carrier such as an alcohol composition (i.e., propylene glycol or dipropylene glycol), a cyclodextrin, a maltodextrin, or a starch. Alternatively, the zeolite can be mixed into the dry materials prior to forming the wet food composition.

Treats of the present invention can be prepared by an extrusion or baking process similar to those described above for dry food. Other processes also may be used to either coat the flavoring composition on the exterior of existing treat forms, or inject it into an existing treat form.

Animal toys of the present invention are typically prepared by coating any existing toy with a flavoring composition having the zeolite mixed therein.

The method of the invention will be found especially beneficial if an animal is finicky, has poor appetite, or is in ill health, all of which can occur in animals of all ages but especially in aged animals. The method is especially beneficial if the food composition is one to which the animal is unaccustomed or if the food composition contains ingredients or a balance of ingredients designed to improve health or wellness with less emphasis on palatability.

In a further aspect, the present invention provides methods for enhancing palatability of a composition for consumption by an animal. The methods comprise adding a palatability enhancing amount of a zeolite to the composition. In preferred embodiments, the zeolite is added to the composition is amounts of at least about 0.01% by weight zeolite, preferably in amounts of from about 0.01% to about 4%, most preferably in amounts of from about 0.5% to about 2%. The invention also provides the products produced according to the methods.

The methods are accomplished by supplying the compositions to an animal in various forms. For example, one or more composition elements in separate containers and admixed just prior to administration. In one embodiment, the composition elements and zeolite are admixed in one container and the resulting composition mixed with other ingredients just prior to administration, e.g., by stirring the zeolite into or sprinkling the zeolite onto the other ingredients. In another, one or more ingredients are admixed with the zeolite during manufacture just prior to administration. In another, the zeolite is coated onto the other ingredient(s) during the manufacturing process or after the ingredients are manufactured.

The compositions are administered orally using any suitable form for oral administration, e.g., tablets, pills, suspensions, solutions (possibly admixed with drinking water), emulsions, capsules, powders, syrups, and palatable feed compositions (a confectionery for a human or a treat or flavored treat for an animal). In a preferred embodiment, the zeolite and other elements are admixed during manufacture process used to prepare a food composition for consumption by the patient.

The compositions and methods described are useful for a variety of human and non-human animals, including avian, bovine, canine, equine, feline, hicrine, murine, ovine, and porcine animals. Preferably, the animal is a canine or feline.

In another aspect, the present description methods for increasing the ingestion frequency or the ingestion rate of a composition for consumption by an animal comprising feeding the animal a composition comprising a palatability enhancing amount of zeolite and at least one ingredient suitable for consumption by an animal. The zeolite is added to the composition is amounts of at least about 0.01% by weight zeolite, preferably in amounts of from about 0.01% to about 4%, most preferably in amounts of from about 0.5% to about 2%.

In another aspect, the present description provides methods for manufacturing compositions for animal consumption having enhanced palatability. The method comprises admixing a palatability enhancing amount of zeolite and at least one ingredient suitable for consumption by an animal. The zeolite is added to the composition is amounts of at least about 0.01% by weight zeolite, preferably in amounts of from about 0.01% to about 4%, most preferably in amounts of from about 0.5% to about 2%.

In a further aspect, the present description provides a kit for administering a composition for animal consumption having enhanced palatability to an animal comprising in separate containers in a single package a palatability enhancing amount of zeolite and at least one ingredient suitable for consumption by an animal. In additional embodiments, the kit further comprises in separate containers in a single package or in separate containers in a virtual package one or more of (1) instructions for how to combine the zeolite and the ingredient(s) to produce a composition for animal consumption having enhanced palatability, (2) instructions for how to use the composition of the present invention, particularly for the benefit of the animal, and (3) a gastrointestinal tract improving agent selected from the group consisting of probiotics and prebiotics. When the kit comprises a virtual package, the kit is limited to instructions in a virtual environment in combination with one or more physical kit components. The kit contains the zeolite in amounts sufficient to enhance the palatability of the ingredient. Generally, kits contain the zeolite in amounts sufficient to produce a composition having at least about 0.01% zeolite, most preferably in amounts of from about 0.01% to about 4%, and at least one ingredient selected from the group consisting of protein, fat, carbohydrate, fiber, and combinations thereof. Typically, the zeolite and the ingredient(s) are admixed just prior to consumption by an animal. In one embodiment, the kit contains a packet of zeolite and a container of food for consumption by an animal. The kit may contain additional items such as a device for mixing the zeolite and ingredient or a device for containing the admixture, e.g., a food bowl. In another embodiment, the zeolite is mixed with additional nutritional supplements such as vitamins and minerals that promote good health in an animal.

In another aspect, the present description provides means for communicating information about or instructions for admixing and administering the zeolite and the ingredient(s). The communicating means comprises a document, digital storage media, optical storage media, audio presentation, or visual display containing the information or instructions. Preferably, the communication is a displayed web site or a brochure, product label, package insert, advertisement, or visual display containing such information or instructions. Useful information includes one or more of (1) methods and techniques for combining and administering the zeolite and ingredient(s) and (2) contact information for patients to use if they have a question about the invention and its use. Useful instructions include amounts for mixing and administration amounts and frequency. The communication means is useful for instructing on the benefits of using the present invention and communicating the approved methods for administering the invention to an animal.

In a further aspect, the present description provides compositions for animal consumption having enhanced palatability and a beneficial effect on the gastrointestinal tract. The compositions comprise a palatability enhancing amount of zeolite, at least one ingredient suitable for consumption by an animal, and a gastrointestinal tract improving agent selected from the group consisting of probiotics and prebiotics. Probiotics are live microorganisms that have a beneficial effect in the prevention and treatment of specific medical conditions when ingested. Probiotics are believed to exert biological effects through a phenomenon known as colonization resistance. The probiotics facilitate a process whereby the indigenous anaerobic flora limits the concentration of potentially harmful (mostly aerobic) bacteria in the digestive tract. Other modes of action, such as supplying enzymes or influencing enzyme activity in the gastrointestinal tract, may also account for some of the other functions that have been -attributed to probiotics. Prebiotics are nondigestible food ingredients that beneficially affect host health by selectively stimulating the growth and/or activity of bacteria in the colon. The prebiotic, fructooligosaccharide (FOS) is found naturally in many foods such as wheat, onions, bananas, honey, garlic, and leeks. FOS can also be isolated from chicory root or synthesized enzymatically from sucrose. FOS fermentation in the colon results in a large number of physiologic effects including increasing the numbers of bifidobacteria in the colon, increasing calcium absorption, increasing fecal weight, shortening of gastrointestinal transit time, and possibly lowering blood lipid levels. The increase in bifidobacteria has been assumed to benefit human health by producing compounds to inhibit potential pathogens, by reducing blood ammonia levels, and by producing vitamins and digestive enzymes. Probiotic bacteria such as Lactobacilli or Bifidobacteria are believed to positively affect the immune response by improving the intestinal microbial balance leading to enhanced antibody production and phagocytic (devouring or killing) activity of white blood cells. Bifidobacterium lactis could be an effective probiotic dietary supplement for enhancing some aspects of cellular immunity in the elderly. Probiotics enhance systemic cellular immune responses and may be useful as a dietary supplement to boost natural immunity in otherwise healthy adults. Probiotics include many types of bacteria but generally are selected from four genera of bacteria: Lactobacilllus acidophillus, Bifidobacteria, Lactococcus, and Pediococcus. The amount of probiotics and prebiotics to be administered to the animal is determined by the skilled artisan based upon the type and nature of the probiotic and prebiotic and the type and nature of the animal, e.g., the age, weight, general health, sex, extent of microbial depletion, presence of harmful bacteria, and diet of the animal. Generally, probiotics are administered to the animal in amounts of from about one to about twenty billion colony forming units (CFUs) per day for the healthy maintenance of intestinal microflora, preferably from about 5 billion to about 10 billion live bacteria per day. Generally, prebiotics are administered in amounts sufficient to positively stimulate the healthy microflora in the gut and cause these "good" bacteria to reproduce. Typical amounts are from about one to about 10 grams per serving or from about 5 percent to about 40 percent of the recommended daily dietary fiber for an animal. The probiotics and prebiotics can be made part of the composition by any suitable means. Generally, the agents are mixed with the composition or applied to the surface of the composition, e.g., by sprinkling. When the agents are part of a kit, the agents can be admixed with other materials or in their own package.

The compositions, methods, and kits are useful for increasing the amount of food consumed by an animal when increased food intake is desirable.

### Examples

This invention can be further illustrated by the following examples of preferred embodiments thereof, although it will be understood that these examples are included merely for purposes of illustration and are not intended to limit the scope of the invention unless otherwise specifically indicated.

### Example 1

This example demonstrates the effect of zeolite as a palatability enhancer when added to a dry, commercial dog food composition. The experiment comprised adding zeolite (2% by weight) and/or fish oil (2.23% by weight) as ingredient(s) to a dry, commercial dog food to form a test composition. The dry, commercial dog food comprised corn, poultry meal, flaxseed, soybean mill run, brewer's rice, soybean meal, peanut hulls, pork fat, palatability enhancer, egg, potassium chloride, L-camitine, choline chloride, calcium carbonate, vitamin E, iodized salt, vitamin premix, taurine, lecithin, glucosamine HCl, mineral premix, L-tryptophan, preservative and chondroitin sulfate.

Each test composition was compared against a control composition in a palatability test. The control composition comprised the dry, commercial dog food without addition of zeolite or fish oil. Palatability was determined by comparing the test composition and the control composition in a standard two-bowl preference test for one day with 25 dogs. The tests were conducted by providing the animals access to equal amounts (approximately 500 g) of the test composition and the control composition at the same time. At the end of 45 minutes, the compositions were collected and weighed to determine how much of each composition was consumed.

Results are shown below in Table 2. It should be noted that "Parity" indicates that no significant preference was observed for the test composition over the indicated control. "Win" indicates that the test composition was preferred over the indicated control, i.e., the test composition was found to be more palatable on average by the dogs in this study. As shown in Table 2, the zeolite test composition exhibited significant palatability enhancement over the control composition on the basis of intake and/or preference. No evidence of any intolerance of the compositions was observed in the dogs following intake.

**Table 2**

| Palatability Results for Dry Dog Food Formulas | | | | | |
|---|---|---|---|---|---|
| No. | Exp. Test Composition | Palatability Result (vs. control) | Intake Ratio | % Pref. Test | % Pref. Control |
| 1 | Dry, commercial dog food with 2.23% fish oil | loss | 0.2141 | 5.0 | 95.0 |
| 2 | Dry, commercial dog food with 2% zeolite | win | 0.6408 | 80.0 | 20.0 |
| 3 | Dry, commercial dog food with 2.23% fish oil and 2% zeolite | loss | 0.3767 | 31.6 | 57.9 |

### Example 2

This example demonstrates a palatability test comparing the two test compositions described in Example 1 above. The experiment compared the test composition of Example 1 comprising fish oil with the test composition of Example 1 comprising zeolite and fish oil in a palatability test. The fish oil test composition served as the control composition. Palatability was determined by comparing the zeolite plus fish oil test composition and the fish oil test composition in a standard two-bowl preference test for one day with 25 dogs. The tests were conducted by providing the animals access to equal amounts (approximately 500 g) of the two compositions at the same time. At the end of 45 minutes, the compositions were collected and weighed to determine how much of each composition was consumed.

As shown below in Table 3, the zeolite plus fish oil test composition exhibited greater intake preference than the fish oil test composition. No evidence of any intolerance of the compositions was observed in the dogs following intake.

**Table 3**

| Palatability Results for Dry Dog Food Formulas | | | | |
|---|---|---|---|---|
| Test Composition | Palatability Result (vs. fish oil control) | Intake Ratio | % Pref. zeolite + fish oil comp. | % Pref. fish oil comp. |
| Dry, commercial dog food with 2.23% fish oil and 2% | Parity | 0.5284 | 60.0% | 40.0% |
| zeolite | | | | |

### Example 3

This example demonstrates the effect of zeolite as a palatability enhancer when added to a dry, commercial dog food composition. The experiment comprised adding zeolite (2% by weight) as an ingredient to a dry, commercial dog food to form a test composition. The dry, commercial dog food comprised corn starch, poultry liver hydrolysate, soy oil, cellulose, dicalcium phosphate, calcium carbonate, processing aid, potassium chloride, iodized salt, choline chloride, DL-methionine, vitamin pre-mix, mineral pre-mix, taurine and ethoxyquin.

The zeolite test composition was compared against a control composition in a palatability test. The control composition comprised the dry, commercial dog food without addition of zeolite. Palatability tests were conducted as described above in Example 1 with 25 dogs over 1 day.

As shown below in Table 4, the zeolite test composition exhibited greater intake preference over the control composition. No evidence of any intolerance of the compositions was observed in the dogs following intake.

**Table 4**

| Palatability Results for Dry Dog Food Formulas | | | | |
|---|---|---|---|---|
| Test Composition | Palatability Result (vs. control) | Intake Ratio | % Pref. Test | % Pref. Control |
| Dry, commercial dog food with 2% zeolite | Parity | 0.5481 | 68.2 | 31.8 |

In the specification, there have been disclosed typical preferred embodiments of the invention and, although specific terms are employed, they are used in a generic and descriptive sense only and not for purposes of limitation, the scope of the invention being set forth in the following claims.

## Claims

1. Use of zeolite as a palatability enhancer in a composition for animal consumption, wherein the composition further comprises at least one ingredient suitable for consumption by an animal, and wherein the zeolite comprises from about 0.01% to about 4% by weight of the composition,
and wherein the animal is a canine or feline.

2. The use of claim 1 wherein the zeolite comprises from about 0.5% to about 2% by weight of the composition.

3. The use of any preceding claim wherein the zeolite comprises a three-dimensional, microporous, crystalline solid with a well-defined structure comprising aluminum, silicon, and oxygen in a tetrahedral framework.

4. The use of any preceding claim wherein the zeolite is selected from the group consisting of analcime, pollucite, wairakite, bellbergite, bikitaite, boggsite, brewsterite, chabazite, willhendersonite, cowlesite, dachiardite, edingtonite, epistilbite, erionite, faujasite, ferrierite, amicite, garronite, gismondine, gobbinsite, gmelinite, gonnardite, goosecreekite, harmotome, phillipsite, wellsite, clinoptilolite, heulandite, laumontite, levyne, mazzite, merlinoite, montesommaite, mordenite, mesolite, natrolite, scolecite, offretite, paranatrolite, paulingite, perlialite, barrerite, stilbite, stellerite, thomsonite, tschemichite, yugawaralite, and mixtures thereof.

5. The use of any preceding claim wherein the zeolite comprises clinoptilolite.

6. The use of any preceding claim wherein the ingredient is selected from the group consisting of protein, fat, carbohydrate, fiber, and combinations thereof.

7. The use of any preceding claim wherein the wherein the composition is a food, a nutritional diet, a supplement, an animal treat, or a toy.

8. The use of any preceding claim further comprising a gastrointestinal tract improving agent selected from the group consisting of probiotics and prebiotics.

9. A method for enhancing palatability of a composition for consumption by an animal, the method comprising adding zeolite to the composition, wherein the zeolite is used to enhance palatability of the composition, wherein the zeolite comprises from about 0.01% to about 4% by weight of the composition, and wherein the animal is a canine or a feline.

10. The method of claim 9 wherein the zeolite comprises from about 0.5% to about 2% by weight of the composition.

11. The method of any of claims 9 or 10 wherein the zeolite comprises a three-dimensional, microporous, crystalline solid with a well-defined structure comprising aluminum, silicon, and oxygen in a tetrahedral framework.

12. The method of any of claims 9 to 11 wherein the zeolite is selected from the group consisting of analcime, pollucite, wairakite, bellbergite, bikitaite, boggsite, brewsterite, chabazite, willhendersonite, cowlesite, dachiardite, edingtonite, epistilbite, erionite, faujasite, ferrierite, amicite, garronite, gismondine, gobbinsite, gmelinite, gonnardite, goosecreekite, harmotome, phillipsite, wellsite, clinoptilolite, heulandite, laumontite, levyne, mazzite, merlinoite, montesommaite, mordenite, mesolite, natrolite, scolecite, offretite, paranatrolite, paulingite, perlialite, barrerite, stilbite, stellerite, thomsonite, tschernichite, yugawaralite, and mixtures thereof.

13. The method of any of claims 9 to 12 wherein the zeolite comprises clinoptilolite.

14. The method of any of claims 9 to 13 wherein the wherein the composition is a nutritional diet, a food, a supplement, an animal treat, or a toy.

## Patentansprüche

1. Verwendung von Zeolith als Geschmacksverstärker in einer Zusammensetzung für die tierische Ernährung, wobei die Zusammensetzung ferner mindestens einen Bestandteil umfasst, der zur Ernährung eines Tiers geeignet ist, und wobei der Zeolith etwa 0,01 Gew.-% bis etwa 4 Gew.-% der Zusammensetzung ausmacht, und wobei das Tier ein Hund oder eine Katze ist.

2. Verwendung nach Anspruch 1, wobei der Zeolith etwa 0,5 Gew.-% bis etwa 2 Gew.-% der Zusammensetzung ausmacht.

3. Verwendung nach einem der vorhergehenden Ansprüche, wobei der Zeolith einen dreidimensionalen, mikroporösen, kristallinen Feststoff mit einer gut definierten Struktur umfasst, die Aluminium, Silicium und Sauerstoff in einem tetraedrischen Grundgerüst umfasst.

4. Verwendung nach einem der vorhergehenden Ansprüche, wobei der Zeolith ausgewählt ist aus der Gruppe bestehend aus Analcim, Pollucit, Wairakit, Bellbergit, Bikitait, Boggsit, Brewsterit, Chabazit, Willhendersonit, Cowlesite, Dachiardit, Edingtonit, Epistilbit, Erionit, Faujasit, Ferrierit, Amicit, Garronit, Gismondin, Gobbinsit, Gmelinit, Gonnardit, Goosecreekit, Harmotom, Phillipsit, Wellsit, Clinoptilolit, Heulandit, Laumontit, Levyn, Mazzit, Merlinoit, Montesommait, Mordenit, Mesolit, Natrolit, Scolecit, Offretit, Paranatrolit, Paulingit, Perlialit, Barrerit, Stilbit, Stellerit, Thomsonit, Tschernichit, Yugawaralit und Mischungen davon.

5. Verwendung nach einem der vorhergehenden Ansprüche, wobei der Zeolith Clinoptilolit umfasst.

6. Verwendung nach einem der vorhergehenden Ansprüche, wobei der Bestandteil ausgewählt ist aus der Gruppe bestehend aus Protein, Fett, Kohlenhydrat, Ballaststoff und Kombinationen davon.

7. Verwendung nach einem der vorhergehenden Ansprüche, wobei die Zusammensetzung ein Futtermittel, eine Ernährungsdiät, ein Ergänzungsmittel, ein Tierleckerli oder Spielzeug ist.

8. Verwendung nach einem der vorhergehenden Ansprüche, die ferner ein den Verdauungstrakt verbesserndes Mittel ausgewählt aus der Gruppe bestehend aus Probiotika und Prebiotika einschließt.

9. Verfahren zur Verbesserung des Geschmacks einer Zusammensetzung zur Ernährung eines Tiers, wobei das Verfahren die Zugabe von Zeolith zu der Zusammensetzung einschließt, wobei der Zeolith verwendet wird, um den Geschmack der Zusammensetzung zu verstärken, wobei der Zeolith etwa 0,01 Gew.-% bis etwa 4 Gew.-% der Zusammensetzung ausmacht und wobei das Tier ein Hund oder eine Katze ist.

10. Verfahren nach Anspruch 9, wobei der Zeolith etwa 0,5 Gew.-% bis etwa 2 Gew.-% der Zusammensetzung ausmacht.

11. Verfahren nach einem der Ansprüche 9 oder 10, wobei der Zeolith einen dreidimensionalen, mikroporösen, kristallinen Feststoff mit einer gut definierten Struktur umfasst, die Aluminium, Silicium und Sauerstoff in einem tetraedrischen Grundgerüst umfasst.

12. Verfahren nach einem der Ansprüche 9 bis 11, wobei der Zeolith ausgewählt ist aus der Gruppe Analcim, Pollucit, Wairakit, Bellbergit, Bikitait, Boggsit, Brewsterit, Chabazit, Willhendersonit, Cowlesite, Dachiardit, Edingtonit, Epistilbit, Erionit, Faujasit, Ferrierit, Amicit, Garronit, Gismondin, Gobbinsit, Gmelinit, Gonnardit, Goosecreekit, Harmotom, Phillipsit, Wellsit, Clinoptilolit, Heulandit, Laumontit, Levyn, Mazzit, Merlinoit, Montesommait, Mordenit, Mesolit, Natrolit, Scolecit, Offretit, Paranatrolit, Paulingit, Perlialit, Barrerit, Stilbit, Stellerit, Thomsonit, Tschernichit, Yugawaralit und Mischungen davon.

13. Verfahren nach einem der Ansprüche 9 bis 12, wobei der Zeolith Clinoptilolit umfasst.

14. Verfahren nach einem der Ansprüche 9 bis 13, wobei die Zusammensetzung eine Ernährungsdiät, ein Futtermittel, ein Ergänzungsstoff, ein Tierleckerli oder ein Spielzeug ist.

## Revendications

1. Utilisation d'une zéolithe en tant qu'exhausteur de saveur dans une composition destinée à la consommation animale, où la composition comprend en outre au moins un ingrédient approprié pour la consommation par un animal, et où la zéolithe comprend d'environ 0,01 % à environ 4 % en poids de la composition, et où l'animal est un canin ou un félin.

2. Utilisation selon la revendication 1, où la zéolithe comprend d'environ 0,5 % à environ 2 % en poids de la composition.

3. Utilisation selon l'une quelconque des revendications précédentes, où la zéolithe comprend un solide cristallin microporeux tridimensionnel avec une structure bien définie comprenant de l'aluminium, du silicium, et de l'oxygène dans un réseau tétraédrique.

4. Utilisation selon l'une quelconque des revendications précédentes, où la zéolithe est choisie parmi le groupe consistant en analcime, pollucite, wairakite, bellbergite, bikitaite, boggsite, brewsterite, chabazite, willhendersonite, cowlesite, dachiardite, edingtonite, epistilbite, erionite, faujasite, ferrierite, amicite, garronite, gismondine, gobbinsite, gmelinite, gonnardite, goosecreekite, harmotome, phillipsite, wellsite, clinoptilolite, heulandite, laumontite, levyne, mazzite, merlinoite, montesommaite, mordénite, mésolite, natrolite, scolécite, offretite, paranatrolite, paulingite, perlialite, barrerite, stilbite, stellerite, thomsonite, tschernichite, yugawaralite, et des mélanges de ces dernières.

5. Utilisation selon l'une quelconque des revendications précédentes, où la zéolithe comprend la clinoptilolite.

6. Utilisation selon l'une quelconque des revendications précédentes, où l'ingrédient est choisi parmi le groupe consistant en protéine, graisse, glucide, fibre, et des combinaisons de ces derniers.

7. Utilisation selon l'une quelconque des revendications précédentes, où la composition est un aliment, un régime nutritionnel, un complément, une friandise pour animaux, ou un jouet.

8. Utilisation selon l'une quelconque des revendications précédentes comprenant en outre un agent améliorant le tractus gastro-intestinal choisi parmi le groupe consistant en probiotiques et prébiotiques.

9. Procédé pour améliorer la saveur d'une composition destinée à la consommation par un animal, le procédé consistant à ajouter une zéolithe à la composition, où la zéolithe est utilisée pour améliorer la saveur de la composition, où la zéolithe comprend environ 0,01 % à environ 4 % en poids de la composition, et où l'animal est un canin ou un félin.

10. Procédé selon la revendication 9, où la zéolithe comprend d'environ 0,5 % à environ 2 % en poids de la composition.

11. Procédé selon l'une quelconque des revendications 9 ou 10, où la zéolithe comprend un solide cristallin microporeux tridimensionnel avec une structure bien définie comprenant de l'aluminium, du silicium, et de l'oxygène dans un réseau tétraédrique.

12. Procédé selon l'une quelconque des revendications 9 à 11, où la zéolithe est choisie parmi le groupe consistant en analcime, pollucite, wairakite, bellbergite, bikitaite, boggsite, brewsterite, chabazite, willhendersonite, cowlesite, dachiardite, edingtonite, epistilbite, erionite, faujasite, ferrierite, amicite, garronite, gismondine, gobbinsite, gmelinite, gonnardite, goosecreekite, harmotome, phillipsite, wellsite, clinoptilolite, heulandite, laumontite, levyne, mazzite, merlinoite, montesommaite, mordénite, mésolite, natrolite, scolécite, offretite, paranatrolite, paulingite, perlialite, barrerite, stilbite, stellerite, thomsonite, tschernichite, yugawaralite, et des mélanges de ces dernières.

13. Procédé selon l'une quelconque des revendications 9 à 12, où la zéolithe comprend la clinoptilolite.

14. Procédé selon l'une quelconque des revendications 9 à 13, où la composition est un régime nutritionnel, un aliment, un complément, une friandise pour animaux, ou un jouet.
